# EUROPEAN PATENT SPECIFICATION

(11) **EP 0 771 401 B1**
(45) Date of publication and mention of the grant of the patent: **01.03.2000**
(21) Application number: 95923357.8
(22) Date of filing: 30.06.1995
(51) Int. Cl.: F16L 59/04, F16L 59/14

(54) **FILLING ARRANGEMENT FOR INSULATION MATERIAL**
FÜLLEINRICHTUNG FÜR ISOLIERMATERIAL
MECANISME DE REMPLISSAGE POUR MATERIAU D'ISOLATION

(30) Priority: 01.07.1994 FI 943183
(43) Date of publication of application: 07.05.1997
(73) Proprietor: Jyväskylän Ivk-Tuote OY, 40250 Jyväskylä (FI)
(72) Inventor: Hautala, Reijo Kalevi, 62310 Voltti (FI)
(74) Representative: Hjelt, Pia Dorrit Helene
(86) International application number: FI9500379
(87) International publication number: WO9601389

(56) References cited:
- DE-A- 4 218 503
- FR-A- 2 544 777
- GB-A- 871 635
- GB-A- 1 604 091
- GB-A- 2 131 862
- US-A- 3 935 632

## Description

The invention relates to an arrangement for filling, in a tube assembly comprising an inner tube and an outer tube-like lining surrounding said inner tube as well as an end flange arranged at each end of said tubes, the interior space between said tubes with an insulation or the like material, especially with blown insulation wool or a corresponding material, which arrangement utilizes filling means which extend through at least one of said end flanges into said interior space. The invention also relates to a method for filling, with an insulation material, the interior space between an inner tube and an outer lining surrounding said tube, through an end flange closing said interior space, in which case means extending into said interior space are utilized as filling means.

In the prior art double tube assemblies are known wherein an insulation is arranged in the interior space between an inner tube and an outer tube surrounding said inner tube. Such tube assemblies are used for a very wide variety of purposes, for instance for conducting warm or cold fluids like liquids, air or smoke. Such assemblies often comprise individual shorter modules to compose a tubing of a desired length and form. Thus, a set of insulating tubes is known from our earlier Finnish patent No. 90590, wherein the set comprises outer tubes which surround inner tubes and end flanges closing the interior space between said tubes, said interior space being filled with an insulation material, especially blown insulation wool or the like. Each module in this set comprises mating end flanges by which said tube modules can be interconnected. In order to guarantee a continuous and sealed structure of the inner tube said tube further comprises mating male and female portions.

A problem connected with the prior art concerns the uniform filling of the interior space between the outer and inner tubes with the insulation.

GB-patent application No A-2 131 862 discloses an arrangement for filling the vertical cavity between two walls with insulation material. Said arrangement includes a feeder nozzle to project into the cavity, as well as an air displacement tube having an air speed detecting means for controlling blower means connected to said feeder nozzle.

It is also known, as such e.g from FI patent application No 912100 or from DE patent application No 28 24 906 to push an insulation feeder tube into such an interior space, from which tube said insulation is fed into said interior space, but in said cases one chiefly uses polyurethane or a corresponding liquid state insulation which is foamed. Such an insulation is suitable enough for relatively low temperatures, but temperatures appearing in a normal fire already cause a decomposition of such an insulation and it may even be ignited. However, if one wishes to obtain a better fire and heat resistance in an air conditioner or chimney application this filling method has proven impossible, since it is not, as such, suitable for the feeding of a filling based on a mineral, cellulose or fibers. For those types of insulation one cannot, with known feeder tubes, achieve a uniform and an overall acceptable filling degree, but the insulation tends to cake up at certain points in the vicinity of the end of the feeder tube.

Especially in order to solve this problem the inventive arrangement has been developed, the characteristics of which are evident from the appended claims. Thus, the filling means comprise feeder and pressure balancing suction tubes which function in pairs, as well as means for directing an active stream of fluid, which transports therewith said insulation material, through said feeder tube into said interior space of said tube assembly and, correspondingly, means for sucking said fluid from said interior space via said suction tube. According to a favorable embodiment of the invention at least one of said filling means, or primarily said feeder tube for said insulation moves in said interior space of said tube assembly, in which case further means are arranged for guiding said tubes suitably simultaneously in said interior space through an opening arranged in an end flange. The inventive method, on the other hand, consists in initially bringing one or several openings located in said end flange to register with parallel filling means functioning in pairs, after which tube assembly and said filling means functioning in pairs are brought in a mutually relative movement so that at least an end of a feeder tube is located at that location in the interior space of said tube assembly, from which the filling operation starts. When the ends of said filling means, or the feeding head of said feeder tube and the extracting end of a pressure balancing tube are aligned in said tube assembly, in the vicinity of the opposite end flange, said insulation material is brought to flow with a flow of fluid along one of said filling means or feeder tube into said interior space. Simultaneously, said fluid is actively removed through the other one of said filling means i.e. through said suction tube, while simultaneously preventing, in a suitable manner, the passage of said insulation material into said suction tube. During the filling procedure said tube assembly and said feeder tube and also said suction tube will be mutually moved, along with the advancement of the filling procedure, to that end flange through which said filling means extend into said interior space. When the whole tube assembly has been filled up said filling means will be located in the vicinity of the insert end flange, after which they will be removed from said interior space. After this, the opening in said end flange, which opening is adapted for said filling means, is closed by suitably separate closing flanges.

The invention will now be described in more detail, with reference to the appended drawing, wherein
- Figure 1: schematically discloses the general arrangement according to the invention,
- Figure 2: shows, in more detail, a perspective view and a partial section of a filling arrangement according to the invention,
- Figure 3: shows an end portion of a tube assembly according to the invention, as seen from one end of said assembly,
- Figure 4: shows, in a partial section, one end the tube assembly according to Figure 2,
- Figure 5: shows an alternative filling arrangement,
- Figure 6: in section shows another alternative suction tube arrangement, and
- Figure 7: shows a favorable embodiment of the end portion of a feeding tube, as seen from above.

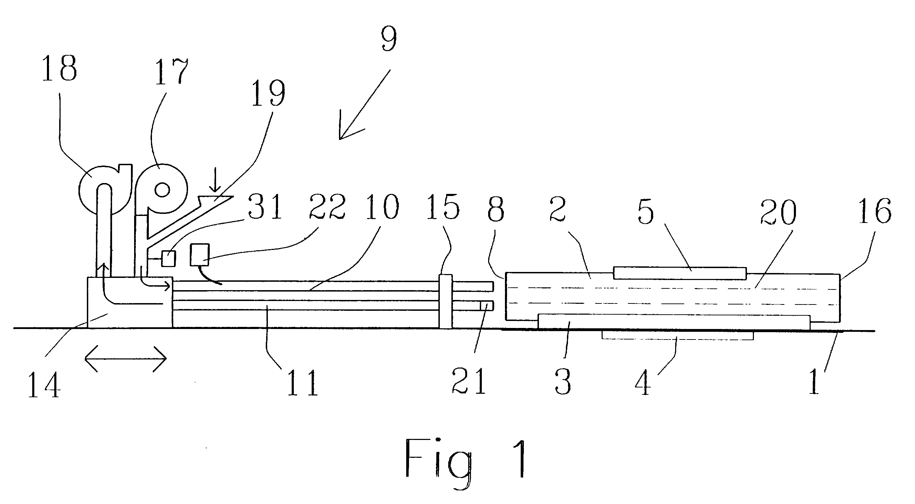

According to Fig. 1 an arrangement according to the invention suitably comprises an insulation procedure table 1, at one end of which there are placed tube assemblies 2 yet to be filled and at the opposite end thereof, respectively, are placed filled tube assemblies to be taken to storage. Said insulation procedure table 1 favorably comprises hoisting means which, according to a favorable embodiment of the invention, lift the empty tube assembly to be weighed prior to the filling procedure. In an arrangement according to Figure 1 said hoisting means are shown as roller type supports 3 which favorably are connected to a balance means generally shown as reference 4, suitably to a balance sensor which functions under said filling procedure table 1. A special characteristic of the invention resides therein that a uniform filling can be achieved also when the tubes are in a horizontal position and remain in position during the whole filling procedure, which considerably facilitates the handling of said tube assemblies 2.

Figure 1 further schematically discloses how a support member 5 is arranged above said tube assembly to be filled, said tube assembly 2 being locked by said support member after the preliminary weighing procedure in a correct position with respect to the filling procedure. If said tube assembly 2 should happen to be in the wrong position, this will be corrected by rotating said assembly using e.g. the roller supports 3 which are disclosed in the drawing, or other similar means. In a favorable embodiment the described weighing and positioning is implemented as an automatic procedure.

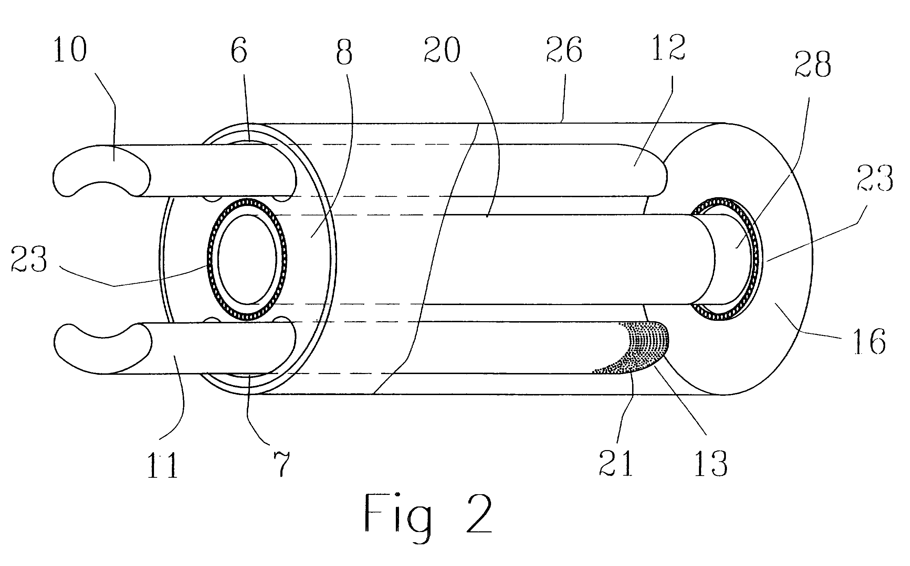

As such, the tube assembly 2 to be filled is pre-fabricated into a form which is more exactly evident from Figures 2 to 6. In this context the purpose of the preliminary weighing procedure is to detect the tare weight of the tube assembly, suitably at an accuracy of about 100 grams. As said tube 2 is weighed also after the filling procedure, one automatically gets the information that the filling was successful, i.e. that the desired amount of insulation material 27 has been brought into the space between the inner tube 20 and the outer lining 26. Since the purpose of the insulation 27 often is, besides the prevention of loss of heat, also to reduce the fire danger, it is usually especially important to secure that the filling procedure has been successful. According to a favorable embodiment of the invention, making sure of the filling degree also comprises the control of the pressure in the feeding blower tube 10, in which case a pressure sensor 31 is arranged to cut off the blowing and feeding of insulation material only at the stage when a certain counter pressure is achieved in the tube. Thus, one can be sure that the insulation has been compacted at a pressure which suites the respective tube, which in this respect ensures an even quality.

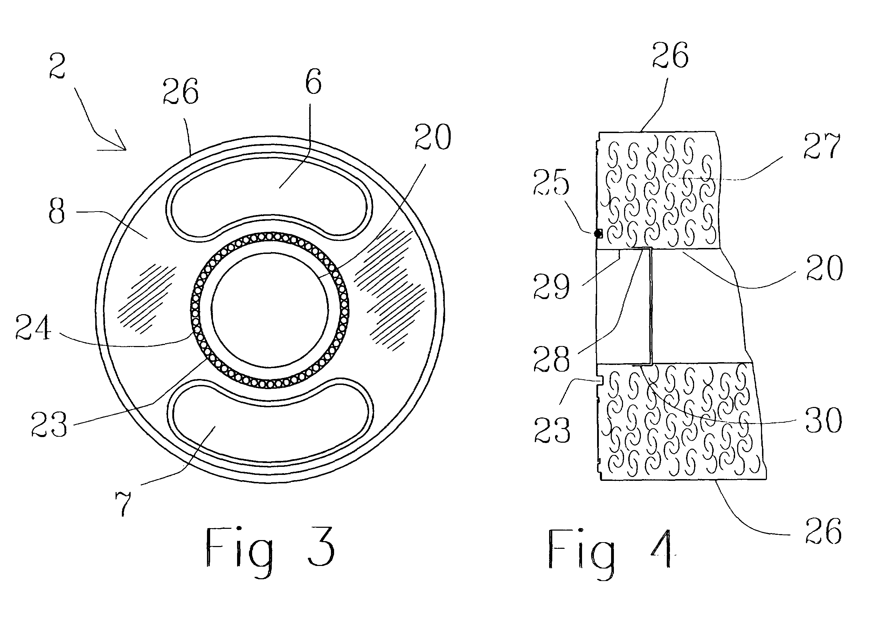

In the embodiment which is disclosed in the drawing the pre-fabricated tube assembly 2 to be filled comprises two filling openings 6 and 7, which suitably are located in an opposed disposition at at least one end flange 8, i.e. a flange which is arranged for the filling procedure, as is shown in more detail in Figures 2 and 3. According to the invention, a filler means 9 comprises at least on set of filler means functioning in pairs, i.e. an insulation feeding tube 10 and a pressure balancing or suction tube 11. At least one of the ends of said tubes, i.e. the end portion 12 of said feeding tube 10, and, according to one embodiment of the invention, also the end 13 of said suction tube, are movable with respect to said tube assembly 2.

Prior to the actual filling procedure said tubes 10 and 11 of said filler means are brought to penetrate into said tube assembly 2 through said filler openings 6 and 7. For relatively thin tube assemblies 2, i.e. in embodiments according to Figures 1 and 2, both feeding means 9, i.e. said feeding tube 10 and said suction tube 11 move relative to said tube assembly 2 essentially along its whole length, for which movement a transport sledge 14 or the like movable device is suitably used. At least said feeding tubes 10 and 11 are attached to said sledge, which is movable in response to suitable guiding means in relation to the tube assembly 2 to be filled both prior to starting the filling procedure and during the actual filling. Figure 1 discloses that said transport sledge 14 can move, in the direction of the arrow, towards said tube assembly 2 and away from it. However, the arrangement according to the invention may equally well be such that said filling tubes 10, 11 and their feeder and suction end portions 12 and 13, respectively, remain in their initial positions and the tube assembly 2 to be filled is thread thereupon. Further, Figure 1 generally discloses separate supporting means 15 according to one embodiment of the invention, wherein said filling tubes 10, 11 can slide and which suitably also comprise means for adjusting the mutual distance between said feeding tubes 10, 11 and/or their alignment.

According to a favorable embodiment of the invention said ends 12 and 13 of said tubes 10 and 11 are located, at the initial stage of the filling procedure, about at an equal distance in the vicinity of the opposite end flange 16 of said tube, as Figure 2 shows in more detail. The cross sections of said feeding and suction tubes 10, 11 are, in the embodiment disclosed in the drawings, favorably arched, i.e. having the general shape of a kidney, as is more clearly evident from Figure 2. With this shape, which can be achieved e.g. by compression molding, the effective section of said tubes 10, 11 will be relatively large and adapted to the space to be filled, which is favorable with respect to filling speed, efficiency and low tendency to malfunction.

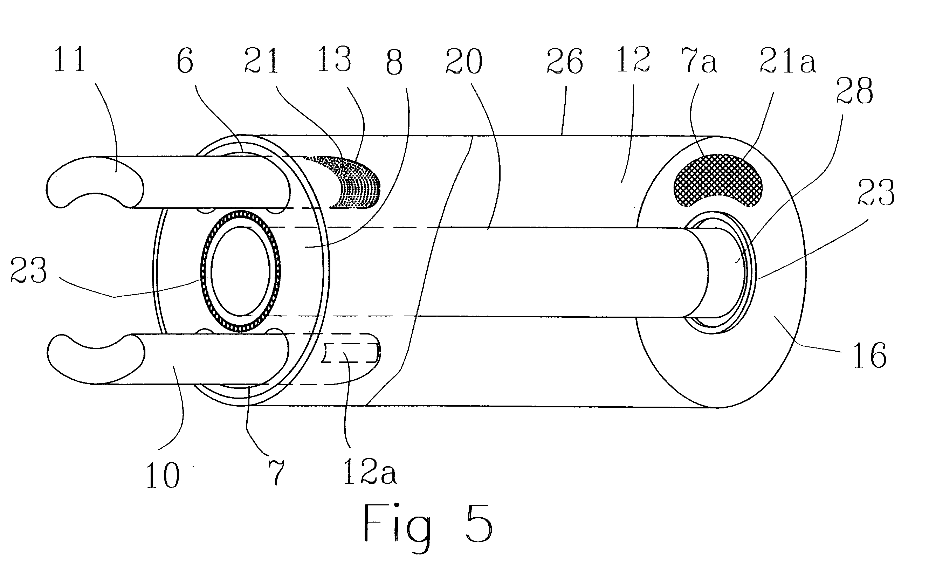

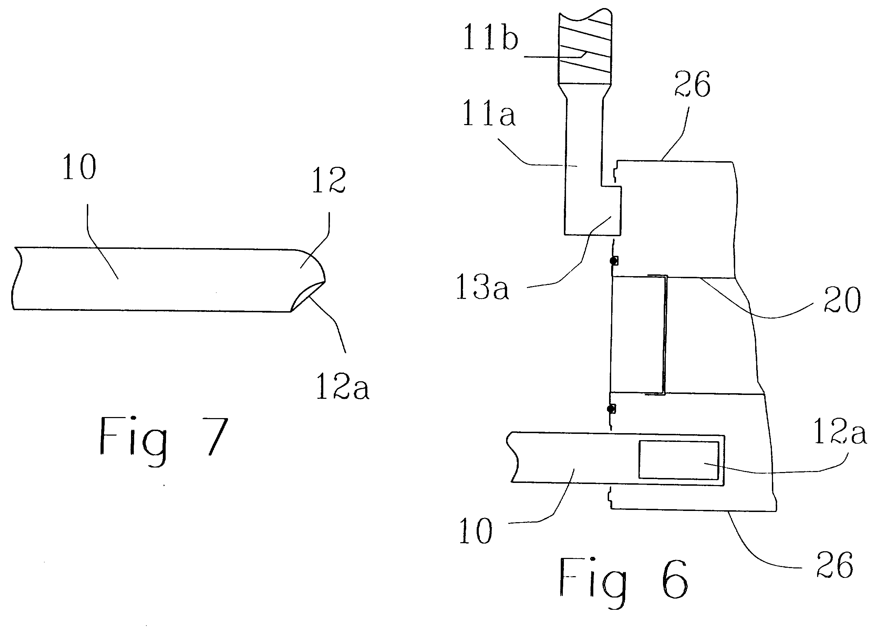

The feeding arrangements shown in Figures 5 and 6 are developed for filling relatively large tube assemblies 2. In this respect it has been observed that said tube assembly 2 will be well filled also with such a filling arrangement wherein said feeder tube 10 is located under said suction tube 11 and said feeder tube 10 as well as said suction tube 11 extend only a short way into said interior space of said tube assembly 2, as Figure 5 discloses more clearly. Figure 6, on the other hand, discloses a corresponding arrangement wherein said end 13 of a suction tube 11a is arranged directly in an opening 6 in said flange 8 of said tube assembly 2, in which case said suction tube 11a in practice does not extend essentially at all into said tube assembly 2 but it is arranged through a suitably flexible tube portion llb separate from the other arrangement at the location of said opening in said flange 8. In both cases it has proven especially favorable that said end 12 of said feeder tube 10 is shaped so that a nozzle opening 12a has an inclined direction with respect to the general extent of said feeder tube 10 and said tube assembly 2. This is more clearly shown in Figure 7, wherein the end of said tube is rounded and the discharge opening 12a is located in the flank of said tube. In this arrangement the insulation 27 which is discharged from said feeder tube 10 will be brought into a turbulent motion wherein the insulation starts to build up uniformly from the back end of said tube arrangement, i.e. starting in the vicinity of said end flange 16 and evenly around the tube.

According to the invention the filling procedure is favorably performed so that a suitable fluid, usually air, is blown by a feeder blower 17 through said feeder tube 10 into said tube 2 to be filled. An insulation material, for example a mineral or pulp wool or the like material, which is suited for blowing, or any other essentially fine graded light filling material, is fed from a filling material tank (not shown) through a feeder channel 19 which is known per se and schematically disclosed in Figure 1 into the stream of said fluid passing by. The filling material will transported by said fluid in said feeder tube 10 into said tube assembly 2 to be filled, wherein said filling material will be discharged from the suitably open feeder end 12 of said feeder tube 10.

According to the invention this insulation or the like filling material, which is discharged from said feeder end 12, will become especially efficiently distributed evenly in said tube assembly 2 to be filled and especially around said inner tube 20, when a pressure balancing or suction tube 11 is used, which functions in parallel with said feeder tube 10. As schematically shown in Figure 1 said suction tube 11 is suitably connected to another fan or suction blower 18 which favorably is similar to said feeder blower 17. The rotational speeds for both blowers may favorably be regulated so that the amount of fluid and its pressure in said feeder tube and, correspondingly, the amount and underpressure in said suction tube are essentially equal and correspond to a desired suitable filling speed and filling density. In an alternative embodiment one and the same blower functions both as a feeder blower and as a suction blower, in which case said fluid will circulate in a essentially closed circulation in the apparatus.

As is evident from Figure 2 the suction head 13 of said pressure balancing or suction tube 11 is located, according to a favorable embodiment of the invention, about at the location of said feeder end 12 but on the opposite side with respect to said inner tube 20 of the tube to be filled. Favorably the arrangement is such that said feeder tube 10 is located higher up and said suction tube 11, correspondingly, lower down, in which case the force of gravity can be better utilized. When insulation intended for the filling is discharged from said feeder tube 10 along with a stream of air or the like, while simultaneously a certain underpressure, which essentially corresponds to the feeding pressure, prevails at the suction end, said insulation or other filling material will travel along with the stream out of the discharge end 12 and towards the suction end 13. Since both tube ends 12, 13 are located essentially at an equal distance (counted from the end flanges 8, 16 of said tube) the main air stream will occur at a very distinct area, i.e. so that said air stream and the insulation traveling therewith will remain essentially in a disk shaped transversal position when seen in the longitudinal direction of said tube 2 to be filled. Thus the distribution of insulation or the like filler can be very well controlled, despite the fact that the filling procedure advances essentially in the horizontal direction and without moving said filling means 9 or said tube assembly to be filled, in a tangential direction with respect to the central axis of the procedure,

In order to prevent insulation from traveling out through said suction tube 11, 11a an for making it remain in the tube assembly 2 to be filled said suction end 13 of said suction tube 11, 11a comprises special barrier means which prevent insulation or the like from passing into said suction tube but allow the entry of said fluid therein. In this respect it has, surprisingly, turned out to be sufficient that the end 13 of said suction tube 11, 11a is closed and equipped with small holes 21 located at a range of about 100 millimeters, which can be better seen in Figure 2. Said small holes will allow said fluid, i.e. usually air, to pass through them via said pressure balancing or suction tubes 11 of said filling means 9 back to said blower 18. At the same time the small diameter of said holes 21 will prevent insulation from passing out from said tube assembly. The size of said holes 21 is favorably adapted in accordance with the quality of the insulation used, and in practice it has been observed that with a hole diameter of about 4 millimeters a good result is achieved with blow wool material and there will occur no clogging. Usually the providing of small holes in an otherwise smooth tube is a measure effective enough, and no clogging of the holes will actually occur. If necessary said suction head 13 may be further provided with special means for opening up obstructions. Alternatively the direction of flow can be momentarily changed so that said suction tube 11 will be pressurized for opening up said holes 21.

In some cases it is further desirable to make sure that insulation 27 material in no case will move, be compressed or compacted at a later stage in a filled tube, or one may wish to prevent the insulation from running out if a tube is cut off. In this case a glue agent or the like may further be sprayed into said insulation. In Figure 1 this is schematically indicated with the reference numeral 22. It has been proven that the feeding of a glue can be performed most favorably at the inlet portion of said feeder tube 10 which will provide enough time and effect for the glue and the insulation to be mixed while the insulation runs along with the air flow.

In Figures 3 and 4 there is disclosed a tube assembly 2 to be filled in accordance an especially favorable embodiment of the invention. A special end flange 8 connected to the tube assembly 2 has arcuate filling openings 6 and 7, respectively, arranged for the inventive filling means 9, i.e. said feeder tube 10 and said suction tube 11. When the tube assembly has been insulated said openings are closed with special closing flanges. Besides these openings 6 and 7, a tube assembly according to the invention further comprises an annular groove 23 having, as a speciality, a number of holes 24. Said holes 24 will further promote the uniform filling of the tube assembly 2 as they act during the filling procedure as pressure compensators preventing the build up of an over- or underpressure. Of course, said holes are especially capable of letting a certain portion of the insulation 27 transporting fluid to flow directly out just at said end flanges 8 and/or 16 of said tube 2, where the even distribution of insulation is at most difficult and where, on the other hand, the uniformity of the insulation 27 is most important. According to one embodiment of the invention said holes 24 may be at least partly replaced with on or several outlet openings 7a located at the flange 16 which is opposite to the filling end, said outlet comprising a suitably detachable screen 21a. According to one embodiment said opening 7a is further connected to an extra suction arrangement. At the end stage of the production said outlet openings are covered with a closing plate in a similar manner to said openings 6 and 7.

After the filling procedure said groove 23 acts as a bracing element for the whole flange and for receiving a further gasket 25, in which case said gasket 25 seals said holes 24 and prevents the passage of any insulation 27. Said gasket 25 also acts as a further sealing element between successive tube modules. In a finished tube said holes 24 further constitute a portion which cuts off the thermal bridge and thus, in a chimney application and especially in a fire situation the heat does not migrate at a dangerously high level at the flange locations from said inner tube 20 to said outer lining 26, or, in a freezing piping, correspondingly, the surface temperature is prevented from falling below the condensation temperature, in which case a condensation would occur.

Figure 4 further discloses that the extension portion 28 of said inner tube 20 favorably is realized in such a way that it comprises a bush portion 29 in connection with the end flange, over which portion said inner tube 20 can be pushed with its slightly enlarged collar portion 30. Thus the inner tube 20 will in practice be quite smooth and thus it does not collect dust or soot but permits the undisturbed passage of the medium which flows in the tube.

Above there has been discussed some favorable embodiments of the invention, but it should be clear that the invention can be modified on many other ways without deviating from the basic idea of the appended claims. Especially the shape, number and mutual dispositions of the filling and suction tubes can be altered so that a uniform filling can be achieved despite the fact that the tube assembly or the like to be filled extends essentially horizontally. In certain cases an arrangement according to the invention can be utilized also in such filling objects where the material to be filled is something else than insulation, but which must still be filled uniformly. Correspondingly, the invention can applied in filling situations where the actual space to be filled is not a clearly shaped space defined by two tubes located one within the other and closed by end flanges, which space still should be filled as uniformly as possible in a plane which extends transversely with respect to the essentially horizontal travel direction of the filling means. Even though the above discusses mainly the filling of a tube assembly made of sheet metal it is clear that the assembly 2 as such may be of another material like cardboard, plastics, fibre glass or other similar material.

## Claims

1. An arrangement for filling, especially in a tube assembly (2) comprising an inner tube (20) and an outer tube-like lining (26) surrounding said inner tube as well as end flanges (8, 16) arranged at each end of said tubes (20, 26), the interior space between said tubes with an insulation (27) or the like material, especially with blown insulation wool or a corresponding material, which arrangement utilizes filling means (9) which extend through at least one of said end flanges (8) into said interior space, whereby said filling means (9) comprise feeder tubes (10) and pressure balancing suction tubes (11, 11a) which function in pairs, as well as means (17) for directing an active stream of fluid, which transports therewith said insulation material, through said feeder tube (10) into said interior space of said tube assembly (2) and, correspondingly, means (18) for withdrawing said stream of fluid from said interior space via said suction tube (11, 11a).

2. An arrangement as defined in claim 1, **characterized** in that said feeder tubes (10) for insulation (27) and said pressure balancing or suction tubes (11, 11a) are arranged for an essentially parallel function, favorably so that one (10) of said tubes extends into one half portion of said space to be filled and the other one (11, 11a) of said tubes opens into the opposite half portion of said space, said arrangement further comprising means (14, 15) for guiding at least one of said tubes (10, 11) in said interior space of said tube assembly (2) through an opening (6, 7) arranged in said end flange (8), favorably at least on of said filling tubes, suitably said feeder tube (10) for said insulation as well as said pressure balancing suction tube (11) being flattened tubes the transversal section of which favorably is generally arcuate, suitably kidney shaped.

3. An arrangement as defined in claim 1 or 2, **characterized** in that to said suction tube (11, 11a) there is attached, suitably in that end which opens into said interior space of said tube assembly (2), a filter arrangement for preventing said insulation (27) from traveling into said suction tube (11, 11a), said filter arrangement suitably comprising a closing portion arranged at the end of said suction tube (11, 11a), said portion suitably comprising holes (21) which are small in relation to the size of the particles of said insulation.

4. An arrangement as defined in claims 1 to 3, **characterized** by the end of said suction tube (11) being located essentially at the level of the end of said feeder tube (10) for said insulation, said feeder tube (10) extending, especially in connection with filling relatively narrow tube assemblies (2), favorably in the upper portion of said interior space of said tube assembly (2) above said central inner tube (20), and said suction tube (11) extending, correspondingly, but at the opposite side with respect to said inner tube (20), i.e. in the lower portion of said interior space and below said inner tube (20).

5. An arrangement as defined in claims 1 to 3, **characterized** by the end of said suction tube (11a) being located essentially in the vicinity of said flange (8), and said feeder tube (10) suitably extending only slightly into said interior space of said tube assembly (2), favorably below said suction tube (11a), a nozzle opening (12a) of said feeder tube (10) being arranged asymmetrically, favorably at an inclined angle with respect the general direction of the extent of said feeder tube (10), for guiding the flow of said fluid to be at least slightly turbulent within said interior space of said tube assembly (2).

6. An arrangement as defined in any one of claims 1 to 5, **characterized** by at least of said end flanges (8, 16) of said tube assembly (2) to be filled further comprising openings for compensating the filling pressure, to which openings means are attached for preventing a discharge of said insulation, suitably an annular perforated portion, the holes (24) of which favorably are located in a groove (23) arranged for a gasket (25) and surrounding the end of said inner tube (20), and/or a separate discharge opening (7a) located in the opposite flange (16) with respect to the flange (8) located in the filling end of said tube assembly (2), said separate discharge opening comprising a screen (21a) for preventing the passage of said insulation, and possibly further a separate suction tube assembly (11a).

7. An arrangement as defined in any one of claims 1 to 6, **characterized** in that the apparatus further comprises suitably controlling and/or conveying means (15, 19, 22) for moving said tubes (2) and/or said filler means (9) at a desired speed to a filling location, means for feeding said insulation material (27) and/or a glue agent into said feeder tube (10), favorably so that an arrangement (22) for feeding glue into said insulation is connected to said feeder tube (10) for said insulation (27), said arrangement favorably comprising one or several glue feeding nozzles favorably being arranged at the inlet end of said feeder tube (10) with respect to the flow of the filler material, and said apparatus further suitably having means (4) for controlling the filling procedure and for verifying the achievement of the desired result.

8. An arrangement as defined in claim 7, **characterized** in that said apparatus for feeding insulation material comprises at least one pump means which circulates, in said tube assembly, said fluid which brings said insulation material (27) and removes, from said tube assembly, such fluid wherefrom said insulation material (27) has settled, said fluid favorably comprising air, and said pump means suitably comprising two parallel blower units (17, 18) having working with essentially the same effect, one of said units, i.e. the feeding one (17), having connected thereto means (19) for feeding insulation material (27) into said feeder tube (10) and favorably also glue agent feeding means (22).

9. A method for filling, with an insulation material (27), the interior space of a tube assembly (2) comprising an inner tube (20) and an outer lining (26) surrounding said tube, through an end flange (8, 16) closing said interior space, in which method means (10, 11) extending into said interior space are utilized as filling means (9), whereby
bringing one or several openings (6, 7) located in at least one (8) of said end flanges to register with parallel filling means functioning in pairs, i.e. with a feeder tube (10) and a suction tube (11),
establishing (17) a fluid flow directed towards said interior space in said tube assembly (2) through said feeder tube (10), as well as establishing (18) a fluid flow directed away from said interior space and aspirating through said suction tube (11),
bringing said insulation material (27) to flow with said fluid flow along one of said filling means, i.e. said feeder tube (10) into said interior space of said tube assembly (2) and simultaneously extracting fluid from the other one of said filling means, i.e. said suction tube (11), while preventing a passage of said insulation material (27) into said suction tube (11),
removing, after the filling procedure, said filler means (10, 11) from being connected to said interior space, and
closing one or several openings (6, 7) adapted for said filling means (9) in said end flange (8).

10. A method as defined in claim 9, **characterized** in bringing said tube assembly (2) and/or said filling means (10, 11) functioning in pairs into such a mutual disposition that the ends (12, 13) of said filling means (10, 11) are located at an essentially equal distance with respect to said end flange (8, 16) of said tube assembly (2) and at such a location where the filling procedure is started, and bringing said tube assembly (2) and/or said filling means (9) mutually to move, along with the progress of the filling procedure, to that end flange (8) from which said filling means (10, 11) extend into said interior space, and suitably withdrawing said fluid, which moves said insulation (27), via both said suction tube (11) of said filling means (9) and through a perforated end flange (8), while preventing the passage of said insulation (27) away from said interior space.

## Patentansprüche

1. Anordnung zur Befüllung des Innenraumes zwischen Rohren mit einem Isoliermaterial (27) oder ähnlichem, insbesondere mit geblasener Isolierwolle oder einem entsprechenden Material, insbesondere bei einer Rohrbaugruppe (2), die ein inneres Rohr (20) und einen äußeren rohrförmigen Mantel (26) umfaßt, der sowohl das innere Rohr als auch Endflansche (8, 16) umgibt, welche an beiden Enden der Rohre (20, 26) angebracht sind, wobei die Anordnung Füllmittel (9) verwendet, die sich durch mindestens einen der Endflansche (8) in den Innenraum erstrecken, wobei die Füllmittel (9) Zufuhrrohre (10) und Druckausgleichsaugrohre (11, 11a) umfassen, die paarweise wirken, sowie ein Mittel (17), um einen aktiven Fluidstrom, der das Isoliermaterial mit sich führt, durch das Einfüllrohr (10) in den Innenraum der Rohrbaugruppe (2) zu leiten, und entsprechend ein Mittel (18), um den Fluidstrom vom Innenraum über das Saugrohr (11, 11a) zurückzuziehen.

2. Anordnung gemäß Anspruch 1, dadurch gekennzeichnet, daß die Zufuhrrohre (10) für die Isolierung (27) und die Druckausgleich- oder Saugrohre (11, 11a) für eine im wesentlichen parallele Wirkungsweise angeordnet sind, vorzugsweise so, daß sich eins (10) der Rohre in eine Hälfte des Raumes erstreckt, der zu befüllen ist, und das andere (11, 11a) der Rohre sich in die gegenüberliegende Hälfte des Raumes erstreckt, wobei die Anordnung des weiteren Mittel (14, 15) umfaßt, um mindestens eins der Rohre (10, 11) in den Innenraum der Rohrbaugruppe (2) durch eine Öffnung (6, 7) zu führen, die im Endflansch (8) angebracht ist, vorzugsweise mindestens eins der Befüllungsrohre, wobei zweckmäßigerweise das Zufuhrrohr (10) für die Isolierung sowie das Druckausgleichsaugrohr (11) abgeflachte Rohre sind, deren Querschnitt vorzugsweise im allgemeinen gekrümmt, zweckmäßig eingeschnürt ist.

3. Anordnung gemäß Anspruch 1 oder 2, dadurch gekennzeichnet, daß am Saugrohr (11, 11a), zweckmäßigerweise an dem Ende, das sich in den Innenraum der Rohrbaugruppe (2) öffnet, eine Filteranordnung angebracht ist, um zu verhindern, daß die Isolierung (27) in das Saugrohr (11, 11a) gelangt, wobei die Filteranordnung zweckmäßigerweise einen Verschlußbereich umfaßt, der am Ende des Saugrohrs (11, 11a) angeordnet ist, wobei der Bereich zweckmäßigerweise Löcher (21) umfaßt, die im Verhältnis zur Größe der Partikel der Isolierung klein sind.

4. Anordnung gemäß Anspruch 1 bis 3, dadurch gekennzeichnet, daß sich das Ende des Saugrohrs (11) im wesentlichen auf der Höhe des Endes des Zufuhrrohrs (10) für die Isolierung befindet, wobei sich das Zufuhrrohr (10), insbesondere in Verbindung mit dem Befüllen von relativ engen Rohrbaugruppen (2), vorzugsweise in den oberen Bereich des Innenraums der Rohrbaugruppe (2) oberhalb des zentralen inneren Rohrs (20) erstreckt, und wobei sich das Saugrohr (11) entsprechend erstreckt, jedoch hinsichtlich des inneren Rohrs (20) auf der gegenüberliegenden Seite, d.h. im unteren Bereich des Innenraums und unterhalb der inneren Rohrs (20).

5. Anordnung gemäß Anspruch 1 bis 3, dadurch gekennzeichnet, daß sich das Ende des Saugrohrs (11a) im wesentlichen in der Nähe des Flansches (8) befindet, und dadurch, daß sich das Zufuhrrohr (10) zweckmäßigerweise nur leicht in den Innenraum der Rohrbaugruppe (2) erstreckt, vorzugsweise unterhalb des Saugrohrs (11a), wobei eine Düsenöffnung (12a) des Zufuhrrohrs (10) asymmetrisch angeordnet ist, vorzugsweise in einem geneigten Winkel im Verhältnis zur allgemeinen Richtung, in der sich das Zufuhrrohr (10) erstreckt, um die Fluidströmung so zu führen, daß sie innerhalb des Innenraums der Rohrbaugruppe (2) zumindest leicht turbulent ist.

6. Anordnung gemäß einem der Ansprüche 1 bis 5, dadurch gekennzeichnet, daß mindestens die Endflansche (8, 16) der Rohrbaugruppe (2), die zu befüllen ist, Öffnungen zum Ausgleich des Fülldrucks umfassen, wobei an den Öffnungen Mittel zur Verhinderung eines Abflusses der Isolierung befestigt sind, zweckmäßigerweise ein ringförmiger durchlöcherter Bereich, dessen Löcher (24) vorzugsweise in einer Nut (23) angeordnet sind, die für eine Dichtung (25) angeordnet ist und das Ende des inneren Rohrs (20) umgibt, und/oder eine getrennte Abflußöffnung (7a), die sich hinsichtlich des Flansches (8), der am Befüllungsende der Rohrbaugruppe (2) angeordnet ist, im gegenüberliegenden Flansch (16) befindet, wobei die getrennte Abflußöffnung ein Sieb (21a) umfaßt, um den Durchgang der Isolierung zu verhindern, sowie gegebenenfalls des weiteren eine getrennte Saugrohrbaugruppe (11a).

7. Anordnung gemäß einem der Ansprüche 1 bis 6, dadurch gekennzeichnet, daß die Vorrichtung des weiteren zweckmäßigerweise Steuerungs- und/oder Fördermittel (15, 19, 22) umfaßt, um die Rohre (2) und/oder die Füllmittel (9) mit einer gewünschten Geschwindigkeit zu einem Befüllungsort zu bewegen, sowie Mittel für die Zufuhr des Isoliermaterials (27) und/oder eines Klebstoffs in das Zufuhrrohr (10), vorzugsweise so, daß eine Anordnung (22) für die Zufuhr von Klebstoff in die Isolierung mit dem Zufuhrrohr (10) für die Isolierung (27) verbunden ist, wobei die Anordnung vorzugsweise eine oder mehrere Klebstoffzufuhrdüsen umfaßt, die vorzugsweise am Einlaßende des Zufuhrrohrs (10) hinsichtlich der Strömung des Füllmaterials angeordnet sind, und wobei die Vorrichtung des weiteren zweckmäßigerweise Mittel (4) zur Steuerung des Füllvorgangs und zur überprüfung, ob das gewünschte Ergebnis erreicht wurde, aufweist.

8. Anordnung gemäß Anspruch 7, dadurch gekennzeichnet, daß die Vorrichtung für die Zufuhr von Isoliermaterial mindestens ein Pumpenmittel umfaßt, das in der Rohrbaugruppe das Fluid zirkulieren läßt, das das Isoliermaterial (27) mit sich führt, und das das Fluid, aus dem sich das Isoliermaterial (27) abgesetzt hat, aus der Rohrbaugruppe entfernt, wobei das Fluid vorzugsweise Luft umfaßt und das Pumpenmittel zweckmäßigerweise zwei parallele Gebläseeinheiten (17, 18) umfaßt, die im wesentlichen mit derselben Wirkung arbeiten, wobei mit einer der Einheiten, d.h. der Zufuhreinheit (17) Mittel (19) für die Zufuhr von Isoliermaterial (27) in das Zufuhrrohr (10) verbunden sind, sowie vorzugsweise ebenfalls ein Klebstoffzufuhrmittel (22).

9. Verfahren zur Befüllung des Innenraums einer Rohrbaugruppe (2) durch einen Endflasch (8, 16), der den Innenraum abschließt, mit einem Isoliermaterial (27), wobei die Rohrbaugruppe ein inneres Rohr (20) und einen äußeren Mantel (26) umfaßt, der das Rohr umgibt, wobei bei diesem Verfahren Mittel (10, 11), die sich in den Innenraum erstrecken, als Füllmittel (9) verwendet werden,
wobei eine oder mehrere Öffnungen (6, 7), die sich an mindestens einem (8) der Endflansche befinden, dazu gebracht werden, zu parallelen Füllmitteln zu passen, die paarweise wirken, d.h. zu einem Zufuhrrohr (10) und einem Saugrohr (11),
wobei eine Fluidströmung durch das Zufuhrrohr (10) erzeugt (17) wird, die in Richtung des Innenraums in der Rohrbaugruppe (2) gerichtet ist, und wobei ein Fluidströmung erzeugt (18) wird, die vom Innenraum weggerichtet ist und durch das Saugrohr (11) absaugt,
wobei das Isoliermaterial (27) dazu gebracht wird, mit der Fluidströmung entlang eines der Füllmittel, d.h. des Zufuhrrohrs (10), in den Innenraum der Rohrbaugruppe (2) zu strömen und gleichzeitig Fluid aus dem anderen der Füllmittel, d.h. dem Saugrohr (11) herausgezogen wird, während ein Durchgang des Isoliermaterials (27) in das Saugrohr (11) verhindert wird,
wobei nach dem Füllvorgang die Füllmittel (10, 11) aus der Verbindung mit dem Innenraum entfernt werden und
eine oder mehrere Öffnungen (6, 7) geschlossen werden, die für die Füllmittel (9) an dem Endflansch (8) ausgelegt sind.

10. Verfahren gemäß Anspruch 9, dadurch gekennzeichnet, daß die Rohrbaugruppe (2) und/oder die Füllmittel (10, 11), die paarweise wirken, in eine solche wechselseitige Anordnung gebracht werden, daß die Enden (12, 13) der Füllmittel (10, 11) in einer im wesentlichen gleichen Entfernung hinsichtlich des Endflansches (8, 16) der Rohrbaugruppe (2) angebracht sind und in einer solchen Position, in der mit dem Füllvorgang begonnen wird, und wobei die Rohrbaugruppe (2) und/oder die Füllmittel (9) dazu gebracht werden, sich wechselseitig im Verlauf des Fortschreitens des Füllvorgangs zu dem Endflansch (8) zu bewegen, von dem sich die Füllmittel (10, 11) in den Innenraum erstrecken, und wobei zweckmäßigerweise das Fluid, das die Isolierung (27) bewegt, sowohl durch das Saugrohr (11) der Füllmittel (9) als auch durch einen durchlöcherten Endflansch (8) zurückgezogen wird, während der Durchgang der Isolierung (27), aus dem Innenraum hinaus, verhindert wird.

## Revendications

1. Agencement de remplissage, particulièrement dans un ensemble de tubes (2) comprenant un tube intérieur (20) et un recouvrement extérieur (26) semblable à un tube entourant ledit tube intérieur ainsi que des rebords d'extrémité (8,16) agencés à chaque extrémité desdits tubes (20, 26), l'espace intérieur entre lesdits tubes avec une isolation (27) ou un matériau analogue, particulièrement avec une laine d'isolation soufflée ou un matériau correspondant, cet agencement utilisant un moyen de remplissage (9) qui s'étend à travers au moins l'un desdits rebords d'extrémité (8) dans ledit espace intérieur, par quoi ledit moyen de remplissage (9) comprend des tubes d'amenée (10) et des tubes d'aspiration d'équilibrage de pression (11, 11a) qui fonctionnent par paires, ainsi que des moyens (17) pour diriger un flux de fluide actif qui transporte avec lui ledit matériau d'isolation, à travers ledit tube d'amenée (10) dans ledit espace intérieur dudit ensemble de tubes (2) et, d'une manière correspondante, un moyen (18) pour retirer ledit flux de fluide dudit espace intérieur par l'intermédiaire dudit tube d'aspiration (11, 11a).

2. Agencement selon la revendication 1, caractérisé en ce que lesdits tubes d'amenée (10) de l'isolation (27) et lesdits tubes d'équilibrage de pression ou d'aspiration (11, 11a) sont agencés en vue d'une fonction sensiblement parallèle, de préférence de telle sorte qu'un (10) desdits tubes s'étend dans une demi-portion dudit espace pour être rempli et l'autre (11, 11a) desdits tubes s'ouvre dans la demi-portion opposée dudit espace, ledit agencement comprenant en outre un moyen (14, 15) pour guider au moins l'un desdits tubes (10, 11) dans ledit espace intérieur dudit ensemble de tubes (2) à travers une ouverture (6, 7) agencée dans ledit rebord d'extrémité (8), de préférence au moins l'un desdits tubes de remplissage, d'une manière appropriée ledit tube d'amenée (10) pour ladite isolation ainsi que ledit tube d'aspiration d'équilibrage de pression (11) étant des tubes aplatis dont la section transversale est avantageusement d'une forme généralement arquée, d'une manière appropriée réniforme.

3. Agencement selon la revendication 1 ou 2, caractérisé en ce qu'il est fixé audit tube d'aspiration (11, 11a), d'une manière appropriée à l'extrémité qui s'ouvre dans ledit espace intérieur dudit ensemble de tubes (2), un agencement de filtre pour empêcher que ladite isolation (27) se déplace dans ledit tube d'aspiration (11, 11a), ledit agencement de filtre comprenant d'une manière appropriée une portion de fermeture disposée à une extrémité dudit tube d'aspiration (11, 11a), ladite portion comprenant d'une manière appropriée des trous (21) qui sont petits relativement à la taille des particules de ladite isolation.

4. Agencement selon les revendications 1 à 3, caractérisé en ce que l'extrémité dudit tube d'aspiration (11) se situe essentiellement au niveau de l'extrémité dudit tube d'amenée (10) pour ladite isolation, ledit tube d'amenée (10) s'étendant, particulièrement en rapport avec le remplissage d'ensembles de tubes relativement étroits (2), d'une manière avantageuse dans la portion supérieure dudit espace intérieur dudit ensemble de tubes (2) au-dessus dudit tube intérieur central (20), et ledit tube d'aspiration (11) s'étendant, d'une manière correspondante, mais au côté opposé par rapport audit tube intérieur (20), c'est-à-dire dans la portion inférieure dudit espace intérieur et en dessous dudit tube intérieur (20).

5. Agencement selon les revendications 1 à 3, caractérisé en ce que l'extrémité dudit tube d'aspiration (11a) se situe essentiellement au voisinage dudit rebord (8), et ledit tube d'amenée (10) s'étend d'une manière appropriée seulement légèrement dans ledit espace intérieur dudit ensemble de tubes (2), de préférence en dessous dudit tube d'aspiration (11a), une ouverture de buse (12a) dudit tube d'amenée (10) étant agencée d'une manière asymétrique, de préférence selon un angle incliné par rapport & la direction générale de l'extension dudit tube d'amenée (10), pour guider l'écoulement dudit fluide pour qu'il soit au moins légèrement turbulent à l'intérieur dudit espace intérieur dudit ensemble de tubes (2).

6. Agencement selon l'une des revendications 1 à 5, caractérisé en ce qu'au moins l'un desdits rebords d'extrémité (8,16) dudit ensemble de tubes (2) à remplir comprend en outre des ouvertures pour la compensation de la pression de remplissage, et à ces ouvertures sont fixés des moyens pour empêcher une évacuation de ladite isolation, d'une manière appropriée une portion annulaire perforée, les trous (24) de celui-ci se situant avantageusement dans une rainure (23) ménagée pour un joint d'étanchéité (25) et entourant l'extrémité dudit tube intérieur (20), et/ou une ouverture d'évacuation séparée (7a) située dans le rebord opposé (16) par rapport au rebord (8) situé dans l'extrémité de remplissage dudit ensemble de tubes (2), ladite ouverture d'évacuation séparée comprenant un écran (21a) pour empêcher le passage de ladite isolation, et en outre éventuellement un ensemble de tubes d'aspiration séparé (11a).

7. Agencement selon l'une des revendications 1 à 6, caractérisé en ce que l'appareil comprend en outre d'une manière appropriée des moyens de commande et/ou de convoyage (15,19,22) pour déplacer lesdits tubes (2) et/ou ledit moyen de remplissage (9) à une vitesse souhaitée à un emplacement de remplissage, un moyen pour amener ledit matériau d'isolation (27) et/ou un agent collant dans ledit tube d'amenée (10), avantageusement de façon qu'un agencement (22) pour l'amenée de la colle dans ladite isolation soit connecté audit tube d'amenée (10) prévu pour ladite isolation (27), ledit agencement comprenant avantageusement une ou plusieurs buses d'amenée de colle avantageusement agencées à l'extrémité d'entrée dudit tube d'amenée (10) par rapport à l'écoulement du matériau de remplissage, et ledit appareil comportant en outre d'une manière appropriée un moyen (4) pour commander le procédé de remplissage et pour vérifier l'obtention du résultat souhaité.

8. Agencement selon la revendication 7, caractérisé en ce que ledit appareil pour l'amenée du matériau d'isolation comprend au moins un moyen de pompe qui fait circuler, dans ledit ensemble de tubes, ledit fluide qui amène ledit matériau d'isolation (27) et retire, dudit ensemble de tubes, le fluide à partir duquel ledit matériau d'isolation (27) s'est posé, ledit fluide comprenant avantageusement de l'air, et ledit moyen de pompe comprenant d'une manière appropriée deux unités de soufflage parallèles (17, 18) fonctionnant sensiblement en obtenant le même effet, à l'une desdites unités, c'est-à-dire à l'unité d'amenée (17), étant connecté un moyen (19) pour introduire le matériau d'isolation (27) dans ledit tube d'amenée (10) et avantageusement aussi un moyen d'amenée (22) pour l'agent collant.

9. Procédé de remplissage, avec un matériau d'isolation (27), l'espace intérieur d'un ensemble de tubes (2) comprenant un tube intérieur (20) et un revêtement extérieur (26) entourant ledit tube, à travers un rebord d'extrémité (8, 16) fermant ledit espace intérieur, où lesdits moyens de procédé (10, 11) s'étendant dans ledit espace intérieur sont utilisés comme moyens de remplissage (9), en amenant ainsi une ou plusieurs ouvertures (6, 7) situées dans au moins l'un (8) desdits rebords d'extrémité à coïncider avec des moyens de remplissage parallèles fonctionnant par paires, c'est-à-dire avec un tube d'amenée (10) et un tube d'aspiration (11), en établissant (17) un écoulement de fluide dirigé vers ledit espace intérieur dans ledit ensemble de tubes (2) à travers ledit tube d'amenée (10), et en établissant (18) un écoulement de fluide dirigé au loin dudit espace intérieur et en aspirant à travers ledit tube d'aspiration (11), en amenant ledit matériau d'isolation (27) à s'écouler avec ledit flux de fluide le long d'un desdits moyens de remplissage, c'est-à-dire ledit tube d'amenée (10) dans ledit espace intérieur dudit ensemble de tubes (2) et en évacuant simultanément le fluide de l'autre desdits moyens de remplissage, c'est-à-dire dudit tube d'aspiration (11), tout en empêchant un passage dudit matériau d'isolation (27) dans ledit tube d'aspiration (11), en déconnectant, après le procédé de remplissage, ledit moyen de remplissage (10, 11) dudit espace intérieur et en fermant une ou plusieurs ouvertures (6,7) adaptées audit moyen de remplissage (9) dans ledit rebord d'extrémité (8).

10. Procédé selon la revendication 9, caractérisé par l'amenée dudit ensemble de tubes (2) et/ou dudit moyen de remplissage (10, 11) fonctionnant par paires dans une telle disposition mutuelle que les extrémités (12, 13) dudit moyen de remplissage (10, 11) se situent à une distance essentiellement égale par rapport audit rebord d'extrémité (8,16) dudit ensemble de tubes (2) et à un emplacement où le procédé de remplissage a été commencé, et en amenant ledit ensemble de tubes (2) et/ou ledit moyen de remplissage (9) à se déplacer mutuellement, conjointement avec l'avance du procédé de remplissage, à ce rebord d'extrémité (8) à partir duquel ledit moyen de remplissage (10, 11) s'étend dans ledit espace intérieur, et en retirant d'une manière appropriée ledit fluide, qui déplace ladite isolation (27), via à la fois ledit tube d'aspiration (11) dudit moyen de remplissage (9) et à travers un rebord d'extrémité perforé (8) tout en empêchant le passage de ladite isolation (27) au loin dudit espace intérieur.
